# FASCICULE DE BREVET EUROPEEN

(11) **EP 1 406 830 B1**
(45) Date de publication et mention de la délivrance du brevet: **25.05.2011**
(21) Numéro de dépôt: 02767583.4
(22) Date de dépôt: 18.07.2002
(51) Int. Cl.: B67D 7/80

(54) **TRANSBORDEUR DE LIQUIDES ALIMENTAIRES USAGES**
VORRICHTUNG ZUM ENTLEEREN VON FRITEUSEN
WASTE LIQUID FOODSTUFF TRANSFER MODULE

(30) Priorité: 18.07.2001 FR 0109617
(43) Date de publication de la demande: 14.04.2004
(73) Titulaire: Atuser SARL, 92200 Neuilly sur Seine (FR)
(72) Inventeur: MULLERIS, Jean-Jacques, F-92200 Neuilly sur Seine (FR); MARTIN, Wilfried, F-31000 Toulouse (FR)
(74) Mandataire: Debay, Yves
(86) Numéro de dépôt international: PCT/FR2002/002574
(87) Numéro de publication internationale: WO 2003/014007

(56) Documents cités:
- US-A- 5 269 230
- US-A- 5 340 471
- US-A- 5 823 097
- US-A- 5 908 551
- US-A- 5 924 589
- US-B1- 6 227 405

## Description

La présente invention concerne un transbordeur destiné en particulier au transport entre un lieu ou appareil d'utilisation et un lieu de stockage ou d'évacuation d'huiles, matières grasses ou liquides alimentaires, par exemple des huiles de friture.

Dans un établissement comprenant des cuisines d'une certaine importance, les cuissons ou préparations d'aliments utilisant un liquide se font souvent dans des récipients ou appareils d'une taille importante, mettant en oeuvre une importante quantité de ce liquide. Lorsque ce liquide est périmé, usagé, ou n'est plus utile, son évacuation hors des locaux d'utilisation doit parfois se faire suivant des conditions particulières, par exemple pour des raisons de pollution ou dans un but de récupération valorisée.

Dans le cas des huiles ou matières grasses de cuisson, les huiles sont souvent stockées dans un ou plusieurs conteneurs de stockage, soit spécifiques soit constitués de simples fûts, en attendant d'être récupérées par un véhicule de collecte.

Pour transporter ces liquides depuis leur lieu d'utilisation jusqu'au conteneur de stockage, il est connu d'utiliser un transbordeur constitué d'un récipient mobile monté sur deux roulettes et un point d'appui, et muni d'une ouverture de remplissage que l'on positionne sous l'orifice d'évacuation de l'appareil de cuisson, par exemple un bac de friteuse, pour recueillir l'huile usagée. Une fois l'appareil vidangé ou lorsque le transbordeur est plein, ce transbordeur est alors déplacé jusqu'au conteneur de stockage dans lequel son contenu est vidé par l'intermédiaire d'un tuyau de vidange et d'une pompe manuelle ou motorisée.

Pour des raisons d'encombrement ou de facilité d'accès lors de la collecte, le conteneur de stockage est souvent situé dans un lieu proche de l'extérieur, et séparé des locaux de cuisson par une certaine distance. Lors du transport, le transbordeur peut alors avoir à franchir un certain nombre d'obstacles ou dénivelées tels que trottoirs ou dos d'âne, et être déplacé sur un sol irrégulier, ce qui occasionne un certain nombre de difficultés. De plus, l'ouverture est fermée par une trappe recouvrant une partie du récipient et peut être à l'origine d'épanchements ou d'éclaboussures lors des cahots. Du fait que les huiles usagées sont à haute température, de l'ordre de 160°C ou plus, les difficultés de transport peuvent donc également être causes de dégâts ou de brûlures au personnel. La publication de la demande de brevet US 5,340,471 propose ainsi un chariot de transport d'huile de cuisine, intégrant un bac de récupération des huiles usagées encore chaudes surmonté d'un couvercle de fermeture et d'un dispositif de pompage de l'huile muni d'une canne pour en permettre la récupération. Dans ce dispositif, la canne permet d'une part le pompage de l'huile dans le bac de récupération et d'autre part la vidange ou l'extraction de l'huile du bac de récupération en faisant fonctionner en sens inverse le dispositif de pompage. Toutefois, un tel dispositif impose l'utilisation d'un moteur pour permettre le pompage lors de la récupération des huiles usagées.

La présente invention a pour objet de pallier les inconvénients de l'art antérieur.

Ce but est atteint par un dispositif de transbordeur pour liquides alimentaires usagés comprenant au moins un conteneur mobile par rapport au sol muni d'au moins une ouverture de remplissage pour recueillir des liquides par gravité et d'au moins une conduite de vidange, des moyens de préhension manuels disposés à une extrémité du conteneur mobile pour permettre son déplacement, caractérisé en ce que l'ouverture de remplissage comporte des moyens de fermeture étanches, y compris à la température maximale du liquide, ces moyens évitant les épanchements de liquide lors des secousses du transport.

Selon une particularité, la partie du conteneur (1) comprenant ladite ouverture (2) de remplissage présente une largeur (L2) plus faible que la largeur (L 1) maximale de ce même conteneur, ladite largeur (L2) plus faible du conteneur (1) correspondant à la dimension minimale de l'espace libéré sous une friteuse.

Selon une particularité, le transbordeur selon l'invention comprend un système de vidage intégré positionné du côté des moyens de préhension.

Selon une particularité, le dispositif est caractérisé en ce que les moyens de fermeture de l'ouverture de remplissage comportent un bouchon circulaire comportant des moyens d'étanchéité et un filetage, ce filetage coopérant avec un filetage porté par le conteneur pour maintenir ce bouchon et ses moyens d'étanchéité fermés.

Selon une particularité, les moyens de fermeture de l'ouverture de remplissage comportent un bouchon circulaire muni de rebords intérieurs discontinus venant coopérer avec des rainures discontinues portées par le conteneur pour maintenir ce bouchon fermé de manière étanche.

Selon une particularité, le dispositif est caractérisé en ce qu'il comporte des moyens de retenue reliant le bouchon au conteneur, évitant d'égarer ce bouchon.

Selon une particularité, le dispositif est caractérisé en ce que l'ouverture de remplissage comporte un élément de filtrage arrêtant les morceaux solides plus grands qu'une dimension déterminée lors du remplissage, cet élément de filtrage étant fixé au conteneur de façon démontable.

Selon une particularité, le dispositif est caractérisé en ce que l'élément de filtrage de l'ouverture de remplissage comporte des moyens de verrouillage de façon à interdire son retrait par une personne non autorisée.

Selon une particularité, le conteneur comprend un obturateur ayant une partie plane horizontale bouchant par le dessous ladite ouverture de remplissage et monté coulissant sur un support vertical du conteneur associé à un élément élastique, ledit obturateur étant plaqué contre l'ouverture de remplissage par ledit élément élastique.

Selon une particularité, ledit élément de filtrage consiste en un panier-filtre coulissant sur ledit support vertical du conteneur et insérable dans le conteneur par l'ouverture de remplissage, ledit panier-filtre surmontant ledit obturateur et étant bloqué à l'intérieur du conteneur par des moyens de calage.

Selon une particularité, le dispositif est caractérisé en ce qu'il comporte au moins trois roues disposées de façon à assurer une stabilité permanente.

Selon une particularité, le dispositif est caractérisé en ce qu'au moins une des roues est multidirectionnelle, les dimensions et la position de ces roues assurant une garde au sol supérieure à six centimètres pour la plus grande partie du transbordeur.

Selon une particularité, le dispositif est caractérisé en ce qu'au moins deux roues comportent un dispositif de freinage ou de blocage.

Selon une particularité, le dispositif est caractérisé en ce que la partie du conteneur comprenant l'ouverture de remplissage présente une largeur plus faible que la largeur maximale de ce même conteneur, cette largeur correspondant à la dimension minimale de l'espace libéré sous une friteuse.

Selon une particularité, le dispositif est caractérisé en ce que la conduite de vidange comporte une partie articulée et stable permettant d'ajuster manuellement la position de l'extrémité libre de cette même conduite de vidange, cette position se maintenant d'elle-même une fois ajustée.

Selon une particularité, le dispositif est caractérisé en ce que la conduite de vidange comporte une pompe manuelle ou motorisée.

Selon une particularité, des éléments de tuyauterie comprenant un moyen étanche de connexion et un moyen d'obturation étanche en position déconnectée dudit moyen de connexion, formant au moins une amorce de conduit de vidange, sont reliés de manière étanche à une ouverture située sur une paroi du conteneur en un point bas de l'espace intérieur dudit conteneur pour permettre une vidange par gravité.

Selon une particularité, le dispositif est caractérisé en ce que la conduite de vidange comporte un dispositif de raccord rapide permettant son raccordement étanche à un tuyau de remplissage d'un autre conteneur.

Selon une particularité, le dispositif est caractérisé en ce que l'espace intérieur du conteneur présente un point bas dans un bossage de la paroi inférieure du conteneur, la conduite de vidange ayant une extrémité dite d'aspiration située à proximité immédiate de ce point bas de façon à pouvoir aspirer la presque totalité du liquide présent dans ce conteneur.

Selon une particularité, le dispositif est caractérisé en ce qu'il comprend des moyens d'accrochage permettant d'accrocher le bouchon, lorsqu'il est ouvert, dans un emplacement n'entravant pas le remplissage.

Selon une particularité, la conduite de vidange intégrée est sensiblement positionnée à l'extrémité du conteneur qui est opposée à la dite ouverture de remplissage avancée.

L'invention, avec ses caractéristiques et avantages, ressortira plus clairement à la lecture de la description faite en référence aux dessins annexés dans lesquels :
- la figure 1 représente une vue en perspective du dispositif selon l'invention, dans un mode de réalisation comprenant une pompe manuelle et une conduite de sortie comportant une partie semi-rigide ;
- la figure 2 représente une vue en perspective du dispositif selon l'invention, dans un mode de réalisation avec raccord rapide et sans pompe ;
- la figure 3 représente une vue en coupe de côté du dispositif selon l'invention, dans un mode de réalisation avec raccord rapide et sans pompe ;
- la figure 4 représente une vue en coupe de côté du dispositif selon l'invention, dans un mode de réalisation avec raccord rapide et pompe manuelle ;
- la figure 5 représente une vue partielle en coupe de côté de l'ouverture de remplissage du dispositif selon l'invention dans un mode de réalisation comportant un bouchon circulaire et un panier de filtrage ;
- la figure 6 représente une vue partielle en coupe de côté d'un dispositif de raccord rapide connectant un tuyau extérieur à la conduite de vidange d'un dispositif selon l'invention ;
- la figure 7 représente une vue en coupe de face d'une variante de réalisation de l'invention ;
- la figure 8 représente une vue de dessus d'un mode de réalisation de l'invention ;
- la figure 9 représente une vue en coupe du système avec obturateur en position fermée ;
- la figure 10 représente une vue en coupe du système avec obturateur en position avec panier-filtre ;
- la figure 11 représente une vue en perspective du dispositif selon l'invention, dans un mode de réalisation comprenant une amorce de conduite de vidange par gravité ;
- la figure 12 représente le détail de l'amorce de conduite de vidange par gravité ajouté au transbordeur dans un mode de réalisation de l'invention.

Le transbordeur selon l'invention est en particulier conçu pour permettre des déplacements aisés et sans risques, en minimisant les précautions particulières à prendre, lors de transports dans des conditions instables et sur des sols irréguliers.

Par opposition aux matériels existants qui sont fermés par une simple trappe rabattue sur l'ouverture rectangulaire d'un bac, cela consiste en particulier à réaliser une fermeture complètement étanche pour toutes les ouvertures basses, en particulier l'ouverture de remplissage. Cela consiste également à utiliser un nombre de roues suffisant pour assurer la stabilité en cours de roulement, alors que les matériels existant présentent souvent deux roues et un point d'appui fixe, et nécessitent donc d'être maintenus en équilibre sur deux roues pendant le roulage. Cela consiste également à prévoir une garde au sol importante malgré les contraintes qui obligent l'ouverture de remplissage à être assez basse ; ce qui conduit à concevoir un conteneur de largeur non uniforme pour garder une capacité suffisante tout en conservant la faible largeur nécessaire à l'avant pour passer sous les appareils de cuisson.

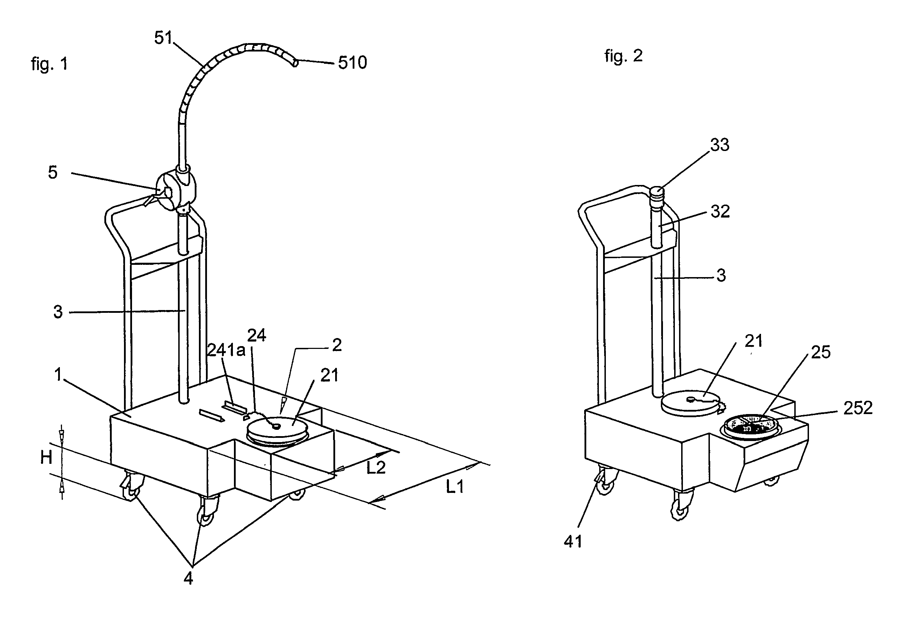

Dans un mode de réalisation représenté en figures 1 à 4, le transbordeur comprend un conteneur (1) déterminant un volume obturable par des moyens de fermeture sur la face supérieure du conteneur, monté sur roues (4) omnidirectionnelles, et muni d'une ouverture (2) de remplissage et d'une conduite (3) de vidange. Cette ouverture de remplissage est située sur le dessus du conteneur (1) et dirigée vers le haut.

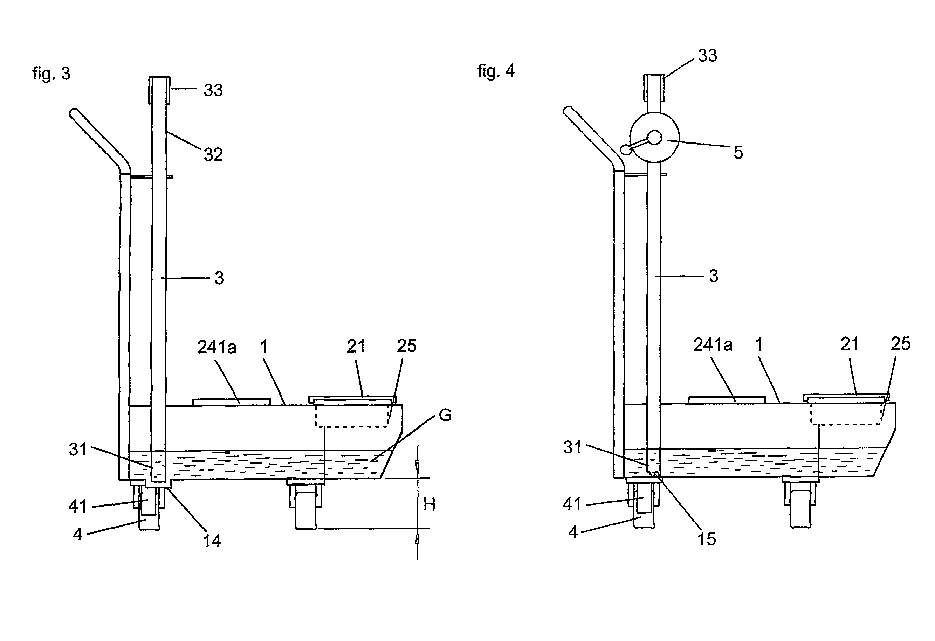

Dans un mode de réalisation représenté en figure 3, la conduite de vidange comprend un tube vertical dont une extrémité (31) dite d'aspiration traverse de façon étanche la paroi supérieure du conteneur (1) et plonge jusqu'au fond dudit conteneur (1). De façon à pouvoir aspirer la presque totalité du contenu du transbordeur, l'espace intérieur du conteneur (1) présente un point bas, réalisé par exemple par une pente de sa paroi inférieure, laquelle présente à ce point bas un bossage (14) vers le bas entourant l'extrémité inférieure de la conduite (3) de vidange. L'extrémité (31) d'aspiration peut porter une crépine (non représentée) d'un type connu, permettant d'éviter le passage de particules solides risquant de bloquer, boucher ou endommager une pompe ou des conduits situés en aval.

Dans un mode de réalisation représenté en figure 4, l'extrémité (31) d'aspiration comporte des échancrures (15) découpées dans ses bords extrêmes, et ses parties saillant entre ces échancrures sont en contact avec la paroi inférieure, dite fond, du conteneur (1). La dimension des échancrures permet alors d'éviter le passage de particules solides risquant de bloquer, boucher ou endommager une pompe ou des conduits situés en aval, et le positionnement de la conduite est facilité à la fabrication par son contact en butée sur le fond du conteneur.

Dans un mode de réalisation (non représenté), la conduite (3) de vidange est connectée de façon étanche à une ouverture dite de vidange située sur une paroi du conteneur (1) s'ouvrant sur un point bas de son espace intérieur, et permet ainsi une évacuation par simple gravité. Cette conduite de vidange peut également être déconnectable du conteneur, celui-ci pouvant comporter des moyens de coupure fermant cette ouverture de vidange. Selon les applications, la conduite peut également être absente ou réduite à une amorce de conduit, la vidange se faisant alors par simple écoulement du contenu du conteneur (201) à travers cette ouverture de vidange, par exemple dans un réceptacle prévu à cet effet.

De façon à pouvoir être déplacé sur des sols irréguliers et franchir des obstacles tels que seuils de portes, trottoirs ou dos d'âne, le conteneur présente une garde (H) au sol, c'est à dire la hauteur par rapport au sol de sa partie la plus basse, relativement importante. Dans un mode de réalisation, cette garde au sol, sur la plus grande partie de la surface du conteneur, est supérieure à 6 cm, et par exemple égale à 13 cm. De façon à assurer un équilibre stable en permanence et à pouvoir immobiliser le transbordeur en toute sécurité, par exemple lors d'un remplissage ou d'une vidange, le dispositif est muni de quatre roues (4) dont deux sont munies d'un dispositif (41) de freinage ou de blocage d'un type connu.

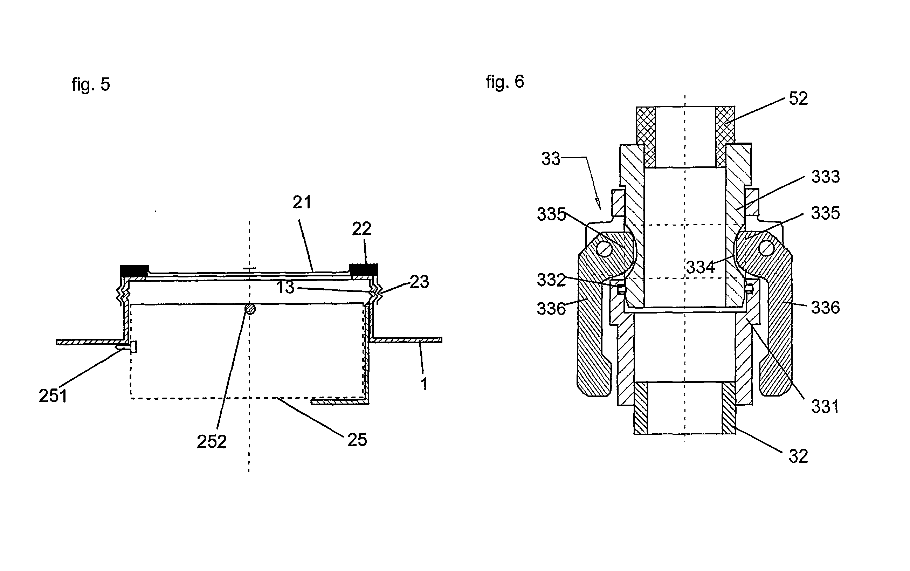

De façon à pouvoir déplacer le transbordeur en toute sécurité, même lorsqu'il contient une huile ou matière grasse à haute température, typiquement aux environs de 185°C, l'ouverture (2) de remplissage du conteneur (1) est munie de moyens de connexion étanches reliant ce conteneur à des moyens de fermeture capables de maintenir cette étanchéité y compris à haute température. Dans un mode de réalisation représenté en figure 5, ces moyens de fermeture comprennent un bouchon (21) circulaire, par exemple d'un diamètre approximatif de 20 cm, comportant un filetage (23, figure 5) et éventuellement des moyens d'étanchéité (22) comme un joint annulaire. Selon les applications et selon qu'une étanchéité dynamique ou statique est nécessaire, l'étanchéité peut être réalisée avec ou sans joint spécifique, par exemple par un ajustement des surfaces en contact ou simplement par l'obstacle du filetage. Lors de la fermeture, le serrage et l'étanchéité sont assurés par la coopération du filetage (23) du bouchon avec un filetage (13) porté par une partie cylindrique du conteneur (1) entourant l'ouverture (2) de remplissage. Dans un mode de réalisation, le bouchon (21) est relié au conteneur (1) par des moyens (24) de retenue comme une chaînette. Ainsi, le bouchon (21) ne risque pas d'être égaré lorsqu'il est ouvert, et peut également être accroché par des moyens d'accrochage pour éviter de traîner, de se salir, ou d'encombrer l'opérateur. Cet accrochage peut se faire en posant le bouchon de façon à coiffer une partie saillante portée par le dessus du conteneur, par exemple par une ou plusieurs pattes (241 a) soudées sur sa paroi supérieure. Cet accrochage peut également se faire par vissage ou clipsage sur un renflement porté par le dessus du conteneur.

De façon à éviter l'introduction de déchets solides venant ou non de l'appareil à vidanger, l'ouverture (2) de remplissage est munie d'au moins un élément de filtrage (25) laissant passer les liquides et retenant les solides plus grands qu'une dimension donnée. Dans un mode de réalisation, cet élément de filtrage est constitué d'un panier présentant la forme d'un cylindre vertical muni d'un fond plat, réalisé en tôle perforée, et posé sur des pattes solidaires des bords de l'ouverture (2) de remplissage. De façon à garantir le filtrage, cet élément de filtrage est bloqué en position par une ou plusieurs vis ou goupilles (251) horizontales traversant la paroi verticale du panier. Ces vis (251) dépassant sous la partie de la paroi supérieure du conteneur constituant le bord de l'ouverture (2) de remplissage et coopère avec cette partie pour former une butée empêchant le soulèvement du panier. Cette fixation est démontable pour pouvoir extraire cet élément de filtrage afin de le nettoyer dans un lave-vaisselle standard. Pour faciliter son extraction, le panier comporte des moyens de préhension, par exemple constitués d'une barre (252) horizontale fixée à l'intérieur du panier selon une position sensiblement diamétrale et à une certaine distance du fond de ce panier.

Selon les applications, cet élément de filtrage (25) peut comporter des moyens de verrouillage, par exemple une serrure ou une fixation nécessitant un outil ou une clé spéciale pour être démontée, de façon à garantir qu'il ne sera pas retiré pas des personnes non autorisées, voulant par exemple introduire certains déchets solides dans le conteneur au lieu de les jeter séparément. Ce filtrage éventuellement assorti d'un verrouillage permet de garantir que les liquides récupérés seront exempts de déchets solides qui risqueraient de boucher les conduits de vidange ou de transfert, ainsi que de déchets solides d'autres provenances qui risqueraient de polluer le liquide récupéré et de compromettre la traçabilité et donc la valorisation du cycle de récupération de ce liquide.

Dans un mode de réalisation, l'ouverture (2) de remplissage comporte plusieurs éléments filtrants. Selon les applications, ces éléments filtrants peuvent présenter des finesses égales ou différentes. Certains de ces éléments filtrants peuvent comporter un verrouillage pour garantir leur maintien en place, certains autres pouvant être facilement extractibles pour pouvoir ôter facilement les déchets qui y sont accumulés.

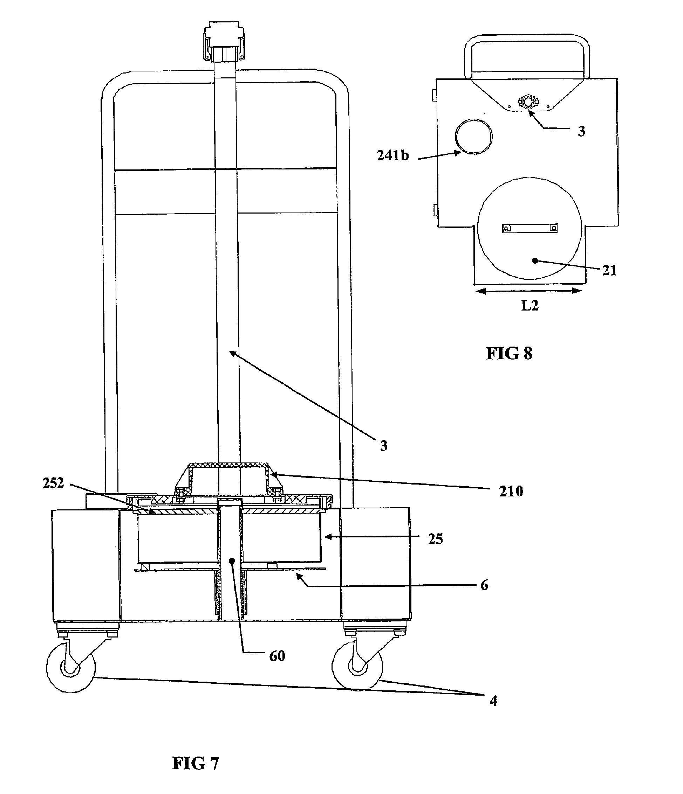

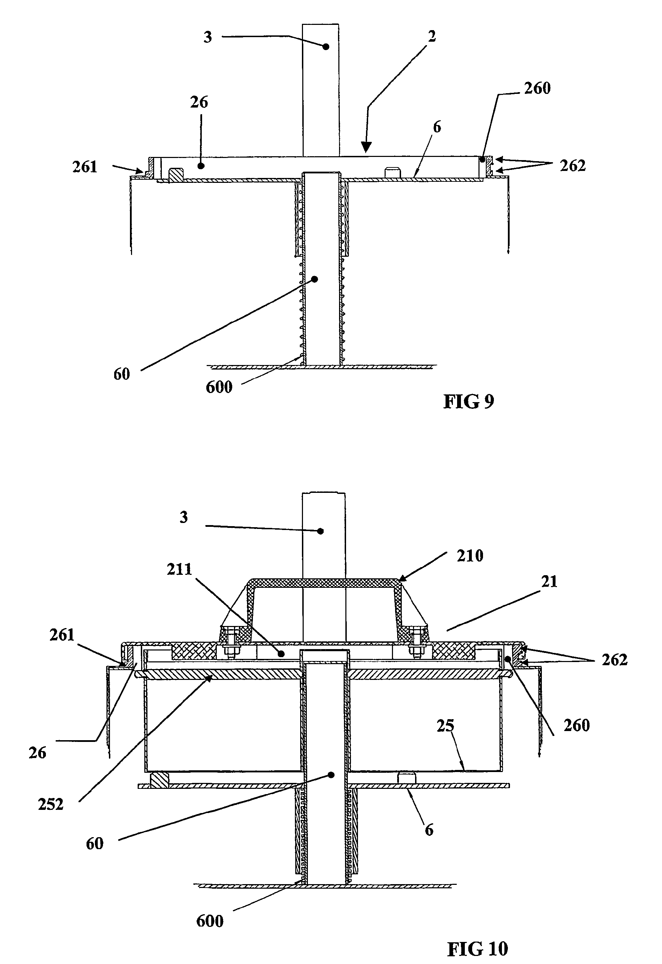

Dans le cadre d'une utilisation du transbordeur de manière routinière, la négligence peut amener à opérer le remplissage du transbordeur en l'absence de filtre. Hors cette absence de filtre entraîne rapidement l'encrassement du dispositif de pompage et oblige à effectuer régulièrement un nettoyage fastidieux ou un changement de pompe. Pour remédier à ce problème, dans une variante de réalisation représentée aux figures 7, 9 et 10, un système de fermeture de l'orifice (2) de remplissage est installé dans le transbordeur. Un obturateur (6) comportant une partie plane horizontale ayant la forme de l'ouverture de remplissage (2) est monté coulissant sur un support vertical associé à un élément élastique tel qu'un ressort (600). Le ressort (600), enroulé autour du support vertical, est maintenu en appui entre la paroi formant le fond du conteneur (1) et la partie plane de l'obturateur (6). Dans un mode de réalisation de l'invention, ledit support vertical est un guide (60) par exemple cylindrique et fixé au conteneur (1). Ce guide vertical (60), d'une hauteur sensiblement égale à la hauteur du conteneur (1), ne dépasse pas le niveau de l'ouverture (2) de remplissage. L'obturateur (6) comprend sous sa partie plane un manchon entourant ledit ressort (60) et le guide vertical (60). La hauteur de ce manchon est par exemple comprise entre le tiers et la moitié de la hauteur du guide vertical (60). La surface de ladite partie plane de l'obturateur (6) est légèrement plus grande que le bord d'étranglement (26) délimitant l'ouverture (2) de remplissage de sorte que la force exercée par le ressort (600) sur ladite partie plane pousse l'obturateur (6) contre ledit bord d'étranglement (26), comme représenté à la figure 9. Pour abaisser cet obturateur (6) et permettre un remplissage du conteneur (1), il est donc obligatoire d'exercer sur l'obturateur (6) une force opposée à celle du ressort (60). Pour cela, il faut obligatoirement installer l'élément de filtrage (25), se présentant par exemple sous la forme d'un panier-filtre comme illustré à la figure 10.

Dans le mode de réalisation préféré de l'invention, un panier-filtre dont les dimensions sont sensiblement égales à celles de l'ouverture (2) de remplissage est mis en place sur ladite partie plane de l'obturateur (6). Ce panier-filtre comporte au centre un manchon cylindrique de diamètre suffisant pour être inséré par coulissement autour du guide vertical (60) et une barre horizontale (252) servant à la fois à la préhension et au maintien du panier-filtre à l'intérieur du conteneur (1). Comme représenté à la figure 7, cette barre (252), sensiblement diamétrale, comporte deux extrémités formant des ergots. Ces ergots, diamétralement opposés, sont en saillie par rapport au panier-filtre. Une partie cylindrique du conteneur (1) entourant l'ouverture (2) de remplissage forme un bord d'étranglement (26) ajouré en deux endroits diamétralement opposés destinés au passage des ergots. Le bord d'étranglement (26) peut tout simplement comporter deux fentes (260) pour que les ergots passent en dessous dudit bord d'étranglement. La mise en place du panier-filtre consiste alors à insérer le panier-filtre dans le conteneur (1) en poussant vers le bas l'obturateur (6), amener les ergots dans les fentes (260) sous ledit bord d'étranglement (26), puis tourner ladite barre de préhension (252), par exemple d'un quart de tour. Ce système avec ergots peut évidemment être remplacé par d'autres moyens de calage du panier-filtre, par exemple des éléments de vissage, des éléments en saillie rétractables, etc. Le panier-filtre est par exemple en acier inoxydable et peut être nettoyé aussi bien manuellement que dans des machines à laver.

Dans le mode de réalisation des figures 7 à 10, l'ouverture (2) de remplissage, circulaire, d'un diamètre d'environ 20 à 45 cm par exemple, est fermée de manière étanche à l'aide d'un bouchon (21) circulaire avec poignée (210). Pour des utilisations très régulières du transbordeur, il peut s'avérer particulièrement avantageux de disposer d'un bouchon étanche dont la fermeture est à la fois sûre et rapide. Comme représenté à la figure 10, le contour extérieur de la partie cylindrique du conteneur (1) entourant l'ouverture (2) et formant ledit bord d'étranglement (26) comporte un double usinage alternant entre des parties à simple rebord (261) et des parties avec deux rebords parallèles (262) pour permettre la mise en place du bouchon (21). Les portions à deux rebords parallèles (262) comprennent une rainure entre les deux rebords. Le bouchon (21), venant coopérer avec ledit bord d'étranglement (26), comporte des rebords intérieurs discontinus pouvant s'insérer dans les rainures. La fermeture de ce bouchon se réalise donc en deux temps : mise en place du bouchon avec ses rebords intérieurs en vis-à-vis des portions à rebord simple (261), puis rotation du bouchon (21) s'accompagnant d'un serrage étanche lorsque les rebords intérieurs du bouchon (21) viennent dans les rainures.

Comme illustré à la figure 8, les moyens d'accrochage du bouchon sont par exemple constitués d'un cylindre (241 b) fixé sur le dessus du conteneur (1). Le bouchon (21) comprend sur sa face intérieure une cavité cylindrique de dimensions supérieures ou égales à ce cylindre (241 b). Cette cavité centrale (211) peut être positionnée entre les fixations de la poignée (210) du bouchon (21). Ce cylindre (241 b) d'accrochage a un diamètre de l'ordre de la dizaine de centimètres et une hauteur de quelques centimètres. De tels moyens d'accrochage évitent la chute du bouchon (21). La présence de la chaînette susmentionnée permet également d'éviter de perdre ce bouchon (21).
La contenance du panier-filtre peut être comprise entre 1 et 7 litres. Il s'avère important de pouvoir disposer d'un volume de l'ordre de 4 litres dans les utilisations de récupération d'huile de friteuse. Par exemple, pour un volume d'huile à récupérer de l'ordre de 50 litres dans le conteneur (1), le volume des particules séparées par le filtre peut facilement atteindre 1 litre. Un panier-filtre de faible contenance de l'ordre du litre est généralement inapproprié pour ce type d'utilisation. Dans un mode de réalisation de l'invention, le diamètre de l'ouverture (2) de remplissage peut être de l'ordre de 30 cm et la hauteur du panier s'élever à environ 10 cm, ce qui permet d'atteindre une contenance de plus de 6 litres pour le panier-filtre.

De façon à pouvoir introduire aisément l'ouverture (2) de remplissage sous un appareil de cuisson, le conteneur présente dans sa partie portant cette ouverture (2) de remplissage, dite partie avant, une largeur (L2) faible, par exemple comprise entre 30 et 60 cm, et une hauteur maximale faible, par exemple 31 cm depuis le sol. De façon à présenter une capacité suffisante, par exemple de plus de 50 litres, le reste du conteneur (1) présente une largeur (L1), par exemple 57 cm, plus importante que la largeur (L2) de sa partie avant.

Dans un mode de réalisation, la conduite (3) de vidange est fixée par une traverse à un arceau montant à hauteur d'homme et solidaire du conteneur, cet arceau permettant à un opérateur de déplacer le transbordeur sans avoir à se baisser. L'arceau est par exemple positionné à l'extrémité du conteneur (1) opposée à l'ouverture (2) de remplissage.

Selon les applications, l'extrémité (32) dite de refoulement de la conduite (3) de vidange opposée à son extrémité d'aspiration, pourra être connectée de différentes façons.

Dans une application où le transbordeur est utilisé pour transférer un liquide vers de simples fûts ou un conteneur de stockage ne comportant pas de pompe d'aspiration, la conduite (3) de vidange est munie d'une pompe manuelle (5, figure 1 et 4) ou motorisée (non représentée), cette pompe aspirant le contenu du transbordeur par l'extrémité (31) d'aspiration et refoulant par la l'extrémité (32) de refoulement.

Dans une application où le transbordeur est utilisé pour transférer un liquide vers un conteneur ne comportant pas de tuyau ou conduit de remplissage, le dispositif selon l'invention comprend un conduit (51) de sortie comportant un conduit ou une partie de conduit flexible ou semi-rigide, connecté à l'extrémité (32) de refoulement de la conduite (3) de vidange.

Dans un mode de réalisation, le conduit (51) de sortie comprend une partie semi-rigide d'un type connu, par exemple constituée d'une succession de portions de tubes reliées entre elles selon des liaisons souples permettant à un opérateur de déformer le conduit qu'elles forment, tout en gardant une résistance suffisante pour que ce conduit conserve ensuite la forme qu'on lui a donnée. La déformabilité de ce conduit (51) de sortie permet alors de positionner son extrémité (510) libre au-dessus de l'ouverture de remplissage d'un fût ou d'un conteneur de stockage.

Dans un mode de réalisation (non représenté), le conduit (51) de sortie comprend une combinaison de tubes rigides emmanchés libres en rotation dans des coudes rigides. La combinaison de ces rotations permet alors de positionner l'extrémité libre (510) de ce conduit (51) de sortie au-dessus de l'ouverture de remplissage d'un fût ou d'un conteneur de stockage.

Dans une application où le transbordeur est utilisé pour transférer un liquide vers un conteneur comportant un tuyau ou conduit de remplissage, l'extrémité (32) de refoulement de la conduite (3) de vidange comporte un dispositif (33, figures 2 et 4) de raccord rapide permettant de connecter et déconnecter aisément et rapidement cette extrémité (32) à un tuyau (52) de transfert, par exemple flexible, provenant du conteneur de stockage ou relié à celui-ci

Dans un mode de réalisation représenté en figure 6, ce raccord rapide comprend une partie (331) femelle, solidaire de l'extrémité (32) de refoulement, pourvue d'un alésage cylindrique comportant des moyens (332) d'étanchéité, dans laquelle s'emmanche une partie (333) mâle solidaire du tuyau de transfert. Cette partie mâle est d'une forme cylindrique et présente sur sa surface extérieure une gorge (334) dans laquelle s'engagent deux cames (335) portées par la partie femelle et manoeuvrées chacune par un levier (336). En position verrouillée, les cames sont engagées dans la gorge et coopèrent avec celle-ci pour maintenir la partie mâle dans l'alésage de la partie femelle, maintenant ainsi connectées l'extrémité (32) de refoulement de la conduite (3) de vidange et le tuyau (52) de transfert.

Lorsqu'un appareil de cuisson ou un autre appareil contenant un liquide à transborder a besoin d'être vidangé, un opérateur amène le transbordeur devant l'orifice de vidange de l'appareil en question, retire le bouchon (21) et positionne l'ouverture (2) de remplissage sous ou dans l'axe de cet orifice. En ouvrant le robinet de vidange de l'appareil, son contenu s'écoule par l'ouverture (2) de remplissage dans le conteneur (1). Une fois l'appareil vidangé ou lorsque le conteneur (1) est plein, le transbordeur est alors déplacé jusqu'à un conteneur de stockage.

Si le conteneur de stockage ne comprend ni tuyau ni pompe, l'opérateur positionne l'extrémité libre (510) du conduit (51) de sortie au-dessus de ou dans l'ouverture de remplissage du conteneur de stockage. Il actionne alors la pompe (5) du transbordeur pour transférer son contenu dans ce conteneur de stockage.

Si un tuyau (52) de transfert est présent, l'opérateur raccorde une extrémité de ce tuyau (52) de transfert à l'extrémité (32) de refoulement de la conduite (3) de vidange du transbordeur, à l'aide du dispositif (33) de raccord rapide, et raccorde si nécessaire l'autre extrémité du tuyau (52) au conteneur de stockage. Il actionne alors la pompe (5) du transbordeur ou celle du conteneur de stockage si celui-ci en est pourvu.

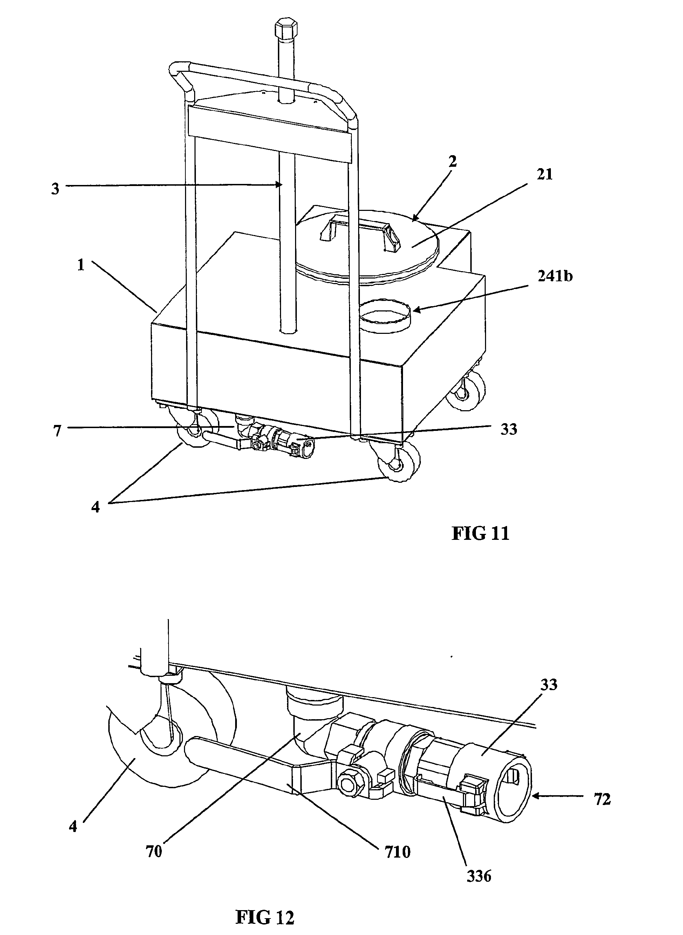

Les figures 11 et 12 présentent une variante de réalisation avec une amorce de conduit de vidange positionnée sous le conteneur (1). Dans ce mode de réalisation le conteneur (1) comprend une ouverture de vidange orientée vers le bas débouchant sur des éléments de tuyauterie (7) incluant un coude (70) pour former un orifice de sortie orienté de manière sensiblement horizontale. Ces éléments de tuyauterie (7) sont de préférence rigides et courts, de sorte qu'ils sont maintenus à une distance de quelques centimètres du sol. Ainsi, la hauteur du coude (70) ne dépasse pas la hauteur de la garde au sol (H) des roues (4) surélevées. Dans un mode de réalisation de l'invention, le coude (70) est libre en rotation autour de l'axe vertical de ladite ouverture de vidange orientée vers la bas. Ces éléments de tuyauterie (7) comportent par exemple le dispositif de raccord rapide (33) décrit ci-dessus ou n'importe quel autre système de connexion de tuyauterie classique permettant de connecter et déconnecter aisément et rapidement l'extrémité libre (72) desdits éléments de tuyauterie (7) à un tuyau de vidange. Dans le mode de réalisation des figures 11 et 12, lesdits éléments de tuyauterie (7) comprennent également une vanne de fermeture (71) manuelle intercalée entre le coude (70) et ledit dispositif de raccord rapide (33). Cette vanne de fermeture (71) comprend une poignée (710) qui est par exemple mobile entre une position verticale et une position horizontale, la position verticale correspondant à l'obturation de ladite vanne (71). Dans un mode de réalisation différent, les éléments de tuyauterie (7) comprennent un dispositif étanche de raccord rapide à système d'obturation étanche intégré, de sorte que l'amorce de conduit de vidange reste fermée de manière étanche lorsque aucune connexion n'est établie sur ladite amorce. Lorsque la partie complémentaire du raccord rapide, située à l'extrémité d'un tuyau de transfert, est emmanchée dans ladite amorce de conduit, le système d'obturation du dispositif de raccord rapide est désactivé. Pour cela, le système d'obturation peut comporter une valve obturant l'amorce de conduit en position déconnectée. Un tel système se montre particulièrement simple à manipuler.

L'ouverture de vidange peut être positionnée sensiblement du côté opposé à l'ouverture (2) de remplissage, comme illustré à la figure 11. Cette ouverture peut correspondre à un point bas de l'espace intérieur du conteneur (1), par exemple le même que celui susmentionné pour accueillir l'extrémité d'aspiration (31) de la conduite (3) de vidange, pour permettre une vidange par simple gravité. Dans un mode de réalisation de l'invention, l'amorce de conduit de vidange est fixe et positionnée sous le conteneur (1), dans une direction sensiblement parallèle à l'un des côtés du conteneur (1).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Transbordeur pour liquides alimentaires usagés comprenant au moins un conteneur (1) mobile par rapport au sol muni d'au moins une ouverture (2) de remplissage pour recueillir des liquides par gravité et d'au moins une conduite (3) de vidange, des moyens de préhension manuels disposés à une extrémité du conteneur (1) mobile pour permettre son déplacement, l'ouverture (2) de remplissage comportant des moyens de connexion étanches aptes à coopérer avec des moyens de fermeture, pour éviter les épanchements de liquide lors des secousses du transport, y compris à la température maximale du liquide, **caractérisé en ce que** le conteneur (1) comprend un obturateur (6) ayant une partie plane horizontale bouchant par le dessous ladite ouverture (2) de remplissage et monté coulissant sur un support vertical du conteneur (1) associé à un élément élastique, ledit obturateur (6) étant plaqué contre l'ouverture (2) de remplissage par ledit élément élastique.

2. Transbordeur selon la revendication 1, **caractérisé en ce que** la partie du conteneur (1) comprenant l'ouverture (2) de remplissage présente une largeur (L2) plus faible que la largeur (L1) maximale de ce même conteneur, cette largeur (L2) correspondant à la dimension minimale de l'espace libéré sous une friteuse.

3. Transbordeur selon la revendication 1 ou 2, **caractérisé en ce que** les moyens de fermeture de l'ouverture (2) de remplissage comportent un bouchon (21) circulaire muni de moyens (22) d'étanchéité et d'un filetage (23), ce filetage coopérant avec un filetage (13) porté par le conteneur (1) pour maintenir ce bouchon et ses moyens d'étanchéité fermés.

4. Transbordeur selon la revendication 1 ou 2, **caractérisé en ce que** les moyens de fermeture de l'ouverture (2) de remplissage comportent un bouchon (21) circulaire muni de rebords intérieurs discontinus venant coopérer avec des rainures discontinues portées par le conteneur (1) pour maintenir ce bouchon (21) fermé de manière étanche.

5. Transbordeur selon l'une quelconque des revendications précédentes, **caractérisé en ce que** l'ouverture (2) de remplissage comporte au moins un élément (25) de filtrage arrêtant les morceaux solides plus grands qu'une dimension déterminée lors du remplissage, cet élément de filtrage étant fixé au conteneur (1) de façon démontable.

6. Transbordeur selon la revendication 5, **caractérisé en ce que** l'élément (25) de filtrage de l'ouverture (2) de remplissage comporte des moyens de verrouillage de façon à interdire son retrait par une personne non autorisée.

7. Transbordeur selon l'une quelconque des revendications 1 à 6, **caractérisé en ce qu'**il comporte plusieurs éléments de filtrage de finesses différentes.

8. Transbordeur selon l'une quelconque des revendications 1 à 7, **caractérisé en ce qu'**au moins un élément de filtrage de l'ouverture (2) de remplissage comporte des moyens (252) de préhension permettant à un opérateur de le saisir facilement pour extraction.

9. Transbordeur selon l'une quelconque des revendications précédentes, **caractérisé en ce que** ledit élément de filtrage consiste en un panier-filtre coulissant sur ledit support vertical du conteneur (1) et insérable dans le conteneur (1) par l'ouverture de remplissage (2), ledit panier-filtre surmontant ledit obturateur (6) et étant bloqué à l'intérieur du conteneur (1) par des moyens de calage.

10. Transbordeur selon l'une quelconque des revendications précédentes, **caractérisé en ce que** la conduite (3) de vidange comporte une partie (51) articulée et stable permettant d'ajuster manuellement la position de l'extrémité libre (510) de cette même conduite (3) de vidange, cette position se maintenant d'elle-même une fois ajustée.

11. Transbordeur selon l'une quelconque des revendications précédentes, **caractérisé en ce que** la conduite (3) de vidange comporte une pompe (5) manuelle ou motorisée.

12. Transbordeur selon l'une quelconque des revendications précédentes, **caractérisé en ce que** la conduite (3) de vidange est connectée de façon étanche à une ouverture située sur une paroi du conteneur (1) en un point bas de l'espace intérieur dudit conteneur (1) et de façon à permettre une vidange par gravité.

13. Transbordeur selon l'une quelconque des revendications précédentes, **caractérisé en ce que** des éléments de tuyauterie (7) comprenant un moyen étanche de connexion et un moyen d'obturation étanche en position déconnectée dudit moyen de connexion, formant au moins une amorce de conduit de vidange, sont reliés de manière étanche à une ouverture située sur une paroi du conteneur (1) en un point bas de l'espace intérieur dudit conteneur (1) pour permettre une vidange par gravité.

14. Transbordeur selon l'une quelconque des revendications précédentes, **caractérisé en ce que** la conduite (3) de vidange comporte un dispositif (33) de raccord rapide permettant son raccordement étanche à un tuyau (52) de remplissage d'un autre conteneur.

15. Transbordeur selon l'une quelconque des revendications précédentes, **caractérisé en ce que** l'espace intérieur du conteneur (1) présente un point bas dans un bossage (14) de la paroi inférieure du conteneur (1), la conduite (3) de vidange ayant une extrémité dite d'aspiration située à proximité immédiate de ce point bas de façon à pouvoir aspirer la presque totalité du liquide présent dans ce conteneur.

## Claims

1. Transfer unit for waste liquid foodstuffs comprising at least one tank (1) which is movable relative to the aground and is equipped with at least one filling opening (2) for collecting liquids by gravity and art least one drainage hose (3), and manual gripping means disposed at one end of the movable tank (1) to enable it to be moved, the filling opening (2) including leak-proof connection means capable of co-operating with closure means in order to avoid liquid spillages when jolted during transport, even at the maximum temperature of the liquid, **characterised in that** the tank (1) comprises a closure (6) having a horizontal planar part which at the bottom forms a stopper for the said filling opining and is slidably mounted on a vertical support of the tank (1) associated with a resilient element, the said closure (6) being held flat against the filling opening (2) by the said resilient element.

2. Transfer unit as claimed in Claim 1, **characterised in that** the part of the tank (1) comprising the filling opening (2) has a width (L2) which is less than the maximum width (L1) of this tank, the said width (L2) corresponding to the minimum dimension of the space freed below a deep fryer.

3. Transfer unit as claimed in Claim 1 or Claim 2, **characterised in that** the means for closing the filling opening (2) include a circular stopper (21) provided with sealing means (22) and a screw thread (23), this screw thread co-operating with a screw thread (13) on the tank (1) in order to keep this stopper and its sealing means closed.

4. Transfer unit as claimed in Claim 1 or Claim 2, **characterised in that** the means for closing the filling opening (2) include a circular stopper (21) provided with discontinuous inner edges which co-operate with discontinuous grooves on the tank (1) in order to keep this stopper (21) closed in a sealed manner.

5. Transfer unit as claimed in any one of the preceding claims, **characterised in that** the filling opening (2) includes at least one filter element which stops the solid pieces larger than a predetermined dimension during filling, this filter element being fixed to the tank (1) so as to be removable.

6. Transfer unit as claimed in Claim 5, **characterised in that** the filter element (25) of the filling opening (2) includes locking means in such a way as to prevent it from being removed by an unauthorised person.

7. Transfer unit as claimed in any one of Claims 1 to 6, **characterised in that** it includes a plurality of filter elements of different mesh fineness.

8. Transfer unit as claimed in any one of Claims 1 to 7, **characterised in that** at least one filter element of the filling element (2) includes gripping means enabling an operator to grasp it easily to remove it.

9. Transfer unit as claimed in many one of the preceding claims, **characterised in that** the said filter elements consists of a basket filter which slides on the said vertical support of the tank (1) and can be inserted into the tank (1) via the filling opening (2), the said basket filter being fitted on top of the said closure (6) and being secured in the interior of the tank (1) by fixing means.

10. Transfer unit as claimed in any one of the preceding claims, **characterised in that** the drainage hose (3) includes a stable articulated part (51) which enables manual adjustment of the position of the free end (510) of this drainage hose (3), this position being maintained by itself once adjustment has been carried out.

11. Transfer unit as claimed in any one of the preceding claims, **characterised in that** the drainage hose (3) includes a manual or motor-driven pump (5).

12. Transfer unit as claimed in any one of the preceding claims, **characterised in that** the drainage hose (3) is connected in a sealed manner to an opening situated on a wall of the tank (1) at a point low down in the interior space of the said tank (1) and in such a way as to permit drainage by gravity.

13. Transfer unit as claimed in any one of the preceding claims, **characterised in that** pipework elements (7) comprising a sealed connection means and a means for sealed closure in the disconnected position of the said connection means, forming at least one drainage pipe stub, are connected in a sealed manner to an opening situated of a wall of the container (1) at a point low down in the interior space of the said tank (1) in order to permit drainage by gravity.

14. Transfer unit as claimed in any one of the preceding claims, **characterised in that** the drainage hose (3) includes a quick connection device (33) enabling it to be connected in a sealed manner to a filling pipe (52) of another contained.

15. Transfer unit as claimed in any one of the preceding claims, **characterised in that** the interior space of the tank (1) has a low point in a projection (14) from the lower wall of the tank (1), the drainage hose (3) have an end referred to as a suction end situated in the immediate proximity of this low point in such a way as to be able to draw off almost all of the liquid present in this tank.

## Patentansprüche

1. Umladevorrichtung für gebrauchte Speiseflüssigkeiten, aufweisend mindestens einen bezüglich des Bodens bewegbaren Behälter (1), der mit mindestens einer Füllöffnung (2) zum Aufnehmen von Flüssigkeiten durch Schwerkraft und mit mindestens einer Ablassleitung (3) versehen ist, wobei manuelle Greifmittel an einem Ende des bewegbaren Behälters (1) angeordnet sind, um dessen Verlagern zu ermöglichen, wobei die Füllöffnung (2) dichte Verbindungsmittel aufweist, die in der Lage sind, mit Verschlussmitteln zusammenzuwirken, um das Herausfließen von Flüssigkeit bei Erschütterungen beim Transport einschließlich bei maximaler Temperatur der Flüssigkeit zu vermeiden, **dadurch gekennzeichnet, dass** der Behälter (1) einen Verschluss (6) aufweist, der einen horizontalen ebenen Teil aufweist, der die Füllöffnung (2) über die Unterseite abdichtet und gleitend an einer einem elastischen Element zugeordneten vertikalen Stütze des Behälters (1) montiert ist, wobei der Verschluss (6) von dem elastischen Element gegen die Öffnung (2) gedrückt wird.

2. Umladevorrichtung gemäß Anspruch 1, **dadurch gekennzeichnet, dass** der Teil des Behälters (1), der die Füllöffnung (2) aufweist, eine Breite (L2) hat, die kleiner als die maximale Breite (L1) desselben Behälters ist, wobei die Breite (L2) mit der minimalen Abmessung des freien Raumes unter einer Fritteuse korrespondiert.

3. Umladevorrichtung gemäß Anspruch 1 oder 2, **dadurch gekennzeichnet, dass** die Verschlussmittel der Füllöffnung (2) einen kreisförmigen Stopfen (21) aufweisen, der mit Dichtungsmitteln (22) und einem Gewinde (23) versehen ist, wobei das Gewinde mit einem von dem Behälter (1) getragenen Gewinde (13) zusammenwirkt, um den Stopfen und seine Dichtungsmittel geschlossen zu halten.

4. Umladevorrichtung gemäß Anspruch 1 oder 2, **dadurch gekennzeichnet, dass** die Schließmittel der Füllöffnung (2) einen kreisförmigen Stopfen (21) aufweisen, der mit unterbrochenen Innenkanten versehen ist, die mit von dem Behälter (1) getragenen unterbrochenen Nuten zusammenwirken, um den Stopfen (21) auf dichte Weise geschlossen zu halten.

5. Umladevorrichtung gemäß einem der vorhergehenden Ansprüche, **dadurch gekennzeichnet, dass** die Füllöffnung (2) mindestens ein Filterelement (25) aufweist, das beim Füllen die festen Stücke aushält, die größer als eine bestimmte Abmessung sind, wobei das Filterelement auf abnehmbare Weise an dem Behälter (1) befestigt ist.

6. Umladevorrichtung gemäß Anspruch 5, **dadurch gekennzeichnet, dass** das filterelement (25) der Füllöffnung (2) Verriegelungsmittel aufweist, um sein Entfernen durch eine nicht autorisierte Person zu verhindern.

7. Umladevorrichtung gemäß einem der Ansprüche 1 bis 6, **dadurch gekennzeichnet, dass** sie mehrere Filterelemente mit unterschiedlichen Feinheiten aufweiset.

8. Umladevorrichtung gemäß einem der Ansprüche 1 bis 7, **dadurch gekennzeichnet, dass** mindestens ein Filterelement der Füllöffnung (2) Greifmittel (252) aufweist, die einer Bedienperson ermöglichen, dieses zum Herausnehmen auf einfache Weise zu ergreifen.

9. Umladevorrichtung gemäß einem der vorhergehenden Ansprüche, **dadurch gekennzeichnet, dass** das Filterelement aus einem Filterkorb besteht, der auf der vertikalen Stütze des Behälters (1) gleitet und durch die Füllöffnung (2) in den Behälter (1) einsetzbar ist, wobei der Filterkorb den Verschluss (6) überragt und im Inneren des Behälters (1) von Verkeilungsmitteln blockiert wird.

10. Umladevorrichtung gemäß einem der vorhergehenden Ansprüche, **dadurch gekennzeichnet, dass** die Ablassleitung (3) einen gelenkigen und stabilen Teil (51) aufweist, der es ermöglicht, die Position des freien Endes (510) derselben Auslassleitung (3) von Hand zu verstellen, wobei die Position sich selbst aufrechterhält, wenn sie einmal verstellt ist.

11. Umladevorrichtung gemäß einem der vorhergehenden Ansprüche, **dadurch gekennzeichnet, dass** die Auslassleitung (3) eine manuelle odermotorhetriebene Pumpe (5) aufweist.

12. Umladevorrichtung gemäß einem der vorhergehenden Ansprüche, **dadurch gekennzeichnet, dass** die Auslassleitung (3) auf dichte Weise und derart mit einer an einer Wand des Behälters (1) an einem Tiefpunkt des Innenraumes des Behälters (1) angeordneten Öffnung verbunden ist, dass ein Ablassen mittels Schwerkraft ermöglicht wird.

13. Umladevorrichtung gemäß einem der vorhergehenden Ansprüche, **dadurch gekennzeichnet, dass** Rohrleitungselemente (7), die ein dichtes Verbindungsmittel und ein dichtes Verschlussmittel in einer von dem Verbindungsmittel getrennten Position aufweisen, die mindestens ein Anfangsstück einer Auslassleitung ausbilden, auf dichte Weise mit einer Öffnung verbunden sind, die an einer Wand des Behälters (1) an einem Tiefpunkt des Innenraumes des Behälters (1) angeordnet ist, um ein Ablassen mittels Schwerkraft zu ermöglichten.

14. Umladevorrichtung gemäß einem der vorhergehenden Ansprüche, **dadurch gekennzeichnet, dass** die Auslassleitung (3) eine Schnellanschlussvorrichtung (33) aufweist, die deren dichtes Anschließen an eine Rohrleitung (52) zum Füllen eines anderen Behälters ermöglicht.

15. Umladevorrichtung gemäß einem der vorhergehenden Ansprüche, **dadurch gekennzeichnet, dass** der Innenraum des Behälters (1) einen Tiefpunkt in einer Vertiefung (14) der unteren Wand des Behälters (1) aufweist, wobei die Auslassleitung (3) ein als Absaug-Ende bezeichnetes Ende aufweist, das in unmittelbarer Nähe zu dem Tiefpunkt angeordnet ist, um nahezu die Gesamtheit der sich in dem Behälter befindenden Flüssigkeit absaugen zu können.
